# EUROPEAN PATENT APPLICATION

(11) **EP 3 115 147 A1**
(43) Date of publication of application: **11.01.2017**
(21) Application number: 16177837.8
(22) Date of filing: 04.07.2016
(51) Int. Cl.: B23P 6/00, B22F 5/04, F01D 5/00, F01D 5/20, B23K 26/342

(54) **SYSTEMS AND METHODS FOR TURBINE BLADE REPAIR**

(30) Priority: 09.07.2015 US 201514794838
(71) Applicant: General Electric Company, Schenectady, NY 12345 (US)
(72) Inventor: CUI, Yan, Greenville, SC South Carolina 29615 (US); KOTTILINGAM, Srikanth Chandrudu, Greenville, SC South Carolina 29615 (US); TOLLISON, Brian Lee, Greenville, SC South Carolina 29615 (US); SCHICK, David Edward, Greenville, SC South Carolina 29615 (US)
(74) Representative: Pöpper, Evamaria

(57) **Abstract**

The present application provides a method of repairing a turbine blade (100). The method may include the steps of removing an existing squealer tip (85) from the turbine blade (100) in whole or in part, positioning the turbine blade (100) in an additive manufacturing system, and building up an extension (120) of a replacement squealer tip (110) on the turbine blade (100) in whole or in part.

## Description

### TECHNICAL FIELD

The present application and the resultant patent relate generally to gas turbine engines and more particularly relate to systems and methods for three-dimensional turbine airfoil squealer tip repair with improved internal cooling geometry for an extended component lifetime.

### BACKGROUND OF THE INVENTION

Cast turbine blades often include a structure known as a "squealer tip". A squealer tip is a relatively small extension of the blade. The squealer tip may have a cross-sectional shape conforming to that of the blade and may be integral with or mounted on the radially outer end of the blade. After a period of time in service, the squealer tip may be eroded, oxidized, and/or corroded by impingement of the hot combustion gases. Because the turbine blade may be expensive to produce, repair or refurbishment of the damaged blade may be preferred if possible. The repair of a turbine blade squealer tip may be performed by grinding away the damaged material and then welding or otherwise attaching replacement material. Cooling the squealer tip also may extend the overall useful component lifetime. Providing cooling, however, has been difficult due to manufacturing constraints.

There is thus a desire for improved systems and methods for turbine blade squealer tip repair and refurbishment. Moreover, such improved systems and methods also may provide internal squealer tip cooling passages so as to extend the overall component lifetime.

### SUMMARY OF THE INVENTION

The present application and the resulting patent provide a method of repairing a turbine blade. The method may include the steps of removing an existing squealer tip from the turbine blade in whole or in part, positioning the turbine blade in an additive manufacturing system, and building up an extension of a replacement squealer tip on the turbine blade in whole or in part. Building up an extension of a replacement squealer tip may include creating a cooling passage or a number of cooling passages through the extension.

The present application and the resultant patent further provide a turbine blade for use in a gas turbine engine. The turbine blade may include an airfoil and a squealer tip built up on the airfoil. The squealer tip may include a cooling passage therein. The squealer tip may be made from a superalloy suitable for an additive manufacturing process.

The present application and the resultant patent further provide a method of repairing a turbine blade. The method may include the steps of removing an existing squealer tip from the turbine blade in whole or in part, positioning the turbine blade in an additive manufacturing system, building up a superalloy extension of a replacement squealer tip on the turbine blade in whole or in part, and creating a cooling passage through the superalloy extension.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig.1 is a schematic diagram of a gas turbine engine showing a compressor, a combustor, a turbine, and a load.
Fig. 2 is a perspective view of a turbine blade with cracks within a squealer tip.
Fig. 3 is a perspective view of the turbine blade of Fig. 2 with the squealer tip removed.
Fig. 4 is a perspective view of a repaired turbine blade with an improved squealer tip as may be described herein.
Fig. 5 is a partial sectional view of the squealer tip of Fig. 4 with a cooling passage.
Fig. 6 is a flow chart showing exemplary steps in repairing a squealer tip as may be described herein.

### DETAILED DESCRIPTION

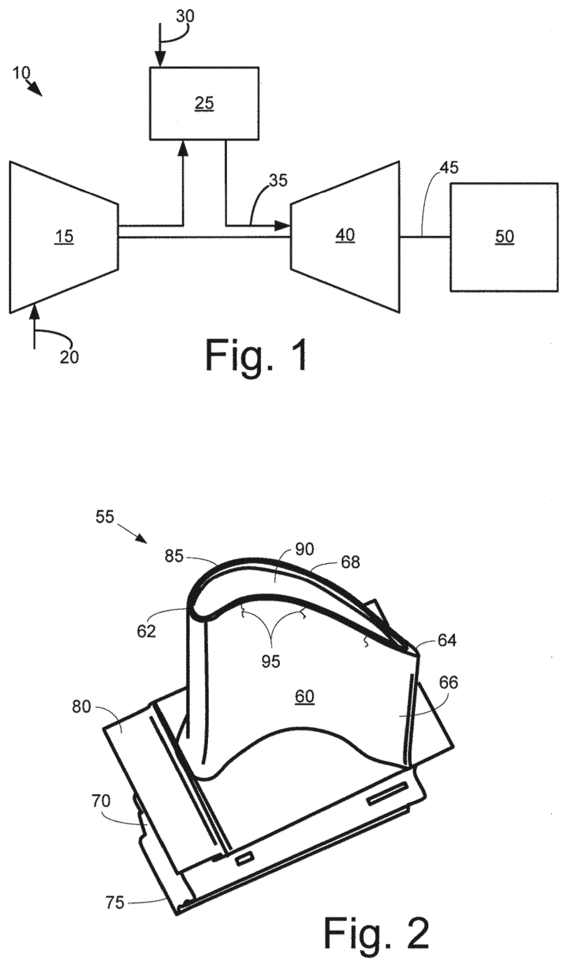

Referring now to the drawings, in which like numerals refer to like elements throughout the several views, Fig. 1 shows a schematic view of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like.

The gas turbine engine 10 may use natural gas, various types of syngas, liquid fuels, and/or other types of fuels and blends thereof. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together.

Fig. 2 is a perspective view of an example of a turbine blade 55. In this example, the turbine blade 55 may be a stage one bucket although any type of blade may be used herein. Generally described, the turbine blade 55 includes an airfoil 60. The airfoil 60 may extend from a leading edge 62 to a trailing edge 64 with a concave pressure side outer wall 66 and a convex suction side outer wall 68. The turbine blade 55 also may include a downwardly extending shank 70 and an attachment in the form of a dovetail 75. A platform 80 may extend transversely between the airfoil 60 and the shank 70 and the dovetail 75. The radial end of the airfoil 60 may include a squealer tip 85. The squealer tip 85 may be an extension of the outer sidewalls 66, 68. The squealer tip 85 may define a recessed tip cap 90 therein. The turbine blade 55 and the squealer tip 85 described herein are for the purposes of example only. Many other designs and configurations may be known.

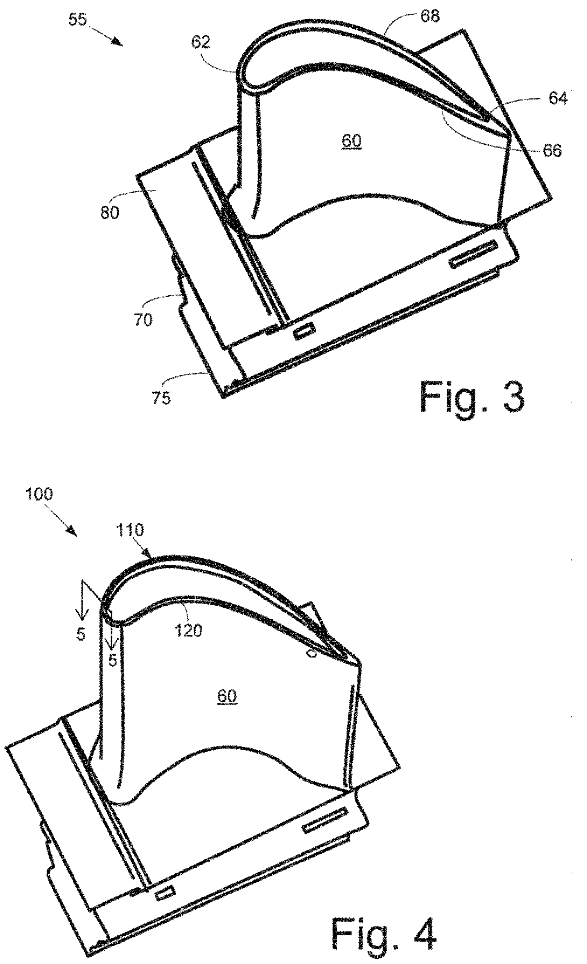

As described above, the squealer tip 85 may be subjected to high temperatures and may rub against a seal structure such as a stationary shroud. As a result, cracks 95 may develop in the squealer tip 85 due to thermally induced stress and material loss due to oxidation and the like. In order to repair the turbine blade 55, the squealer tip 85 may be machined down as is shown in Fig. 3 so as to remove the cracks 85 or other types of worn out, damaged, or otherwise defective locations. The squealer tip material may be machined in a conventional fashion.

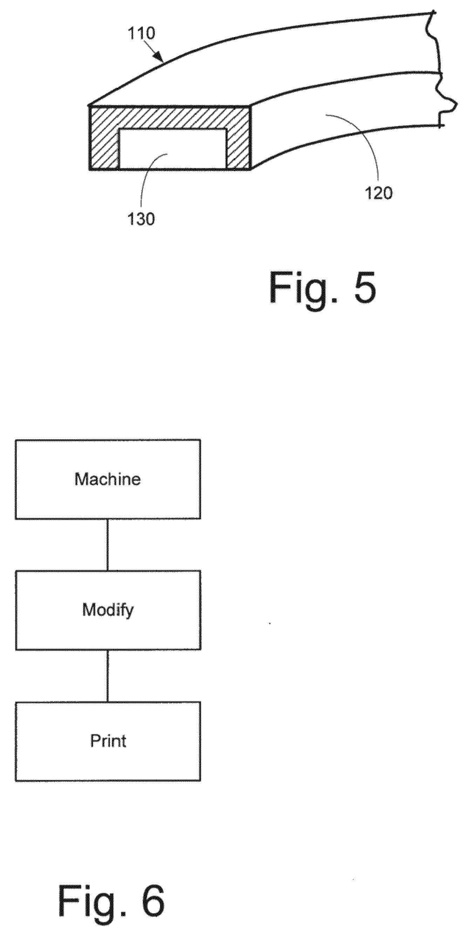

Figs. 4 and 5 show an improved turbine blade 100 as may be described herein. The turbine blade 100 may be the turbine blade 55 described above with the squealer tip 85 machined down and with an improved squealer tip 110 built thereon. The improved squealer tip 110 may include a squealer tip extension 120 built thereon so as to extend radially upward from the outer sidewalls 66, 68. The squealer tip extension 120 may be built-up in any suitable size, shape, or configuration.

The improved squealer tip 110 may have one or more cooling passages built into the squealer tip extension 120 or otherwise. The cooling passages 130 may have any suitable size, shape, or configuration. The cooling passages 130 may be in communication with a source of a cooling medium such as air extending through the airfoil 60 from the compressor 15 or elsewhere. The inside of the cooling passages 130 may have rough surfaces, such as dimples or other types of surface features so as to increase the overall heat transfer effect. An aluminide coating and the like also may be used within the cooling passages 130 to increase the oxygen resistance at elevated temperatures. Other components and other configurations may be used herein.

Instead of conventionally welding or otherwise attaching a squealer tip extension to the airfoil 60, in this example, the squealer tip extension 120 may be built up on the airfoil 60 in an additive manufacturing process, *i.e.,* three dimensional printing. Specifically, the squealer tip extension 120 may be printed or built up via a direct metal laser sintering (DMLS) process and the like in any suitable size, shape, or configuration. DMLS is an additive manufacturing process that uses a laser to sinter a metallic powder material and binds the material together to create a solid structure. Selective laser sintering and other types of sintering and/or melting techniques or other types of additive manufacturing processes and the like also may be used herein to create the squealer tip 110 or other component. Moreover, the use of a DMLS process or other type of three-dimensional printing allows the creation of the cooling passages 130 or other type of complex internal geometry. The DMLS or other type of three-dimensional printing process allows the cooling passages 130 to be created therein with any desired geometry so as to provide improved cooling thereto. An electron beam (EB) welding process and the like also may be used herein.

Because three dimensional printing is a welding process, materials with adequate weldability may be used. For example, the powdered material adjacent to the original airfoil 60 may be a superalloy powder in the easy to weld range (Al ≤ - 0.5 Ti + 3 according to the Chart of Strain Age Cracking Susceptibility of Superalloy) for "buttering" or the initial build-up. Suitable materials may include Haynes 230, Haynes 282, and similar materials. A hard to weld superalloy powder (Al ≥ -0.5 Ti + 3) then may be used to build up the squealer tip extension 120. Suitable materials may include Haynes 214, GTD111, Rene 108, and similar materials. The superalloy materials in general may have high oxidation resistance. Other types of materials also may be used herein.

Fig. 6 shows a flowchart of exemplary steps in carrying out the methods described herein in whole or in part. At step 140, the existing squealer tip 85 may be machined down on the airfoil 60 as is shown in Fig. 3. At step 150, a build plate in a DMLS machine or other device may be modified to accept the airfoil 60 of the turbine blade 55. At step 160, the DMLS machine may print or buildup the squealer tip extension 120 of the improved squealer tip 110 directly on the airfoil 60. This printing or buildup step also may include the creation of the cooling passages 130 or other types of internal geometries therein. The improved turbine blade 100 may now be ready for use or other types of processing. The method steps described herein are not exclusive. Other or different method steps may be used in any desired order to create the squealer tip 110 or other component herein.

The systems and methods described herein thus provide for the fast and efficient repair of turbine blades and squealer tips with the use of advanced superalloy materials with improved oxidation resistance. Moreover, the improved turbine blade 100 may include the cooling passage 130 within the squealer tip 110 for improved cooling and an enhanced overall component lifetime. Such cooling passages 130 generally were not possible given existing manufacturing constraints. Moreover, the systems and methods described herein may be used to upgrade existing turbine blades with such cooling features.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

Various aspects and embodiments of the present invention are defined by the following clauses:
1. A method of repairing a turbine blade, comprising:
   removing an existing squealer tip from the turbine blade in whole or in part;
   positioning the turbine blade in an additive manufacturing system; and
   building up an extension of a replacement squealer tip on the turbine blade in whole or in part.
2. The method of clause 1, wherein the step of removing an existing squealer tip from the turbine blade comprises machining the existing squealer tip in whole or in part.
3. The method of clause 1, wherein the step of positioning the turbine blade in an additive manufacturing system comprises positioning the turbine blade in a direct metal laser sintering system or an electron beam welding system.
4. The method of clause 3, wherein the step of positioning the turbine blade in an additive manufacturing system comprises modifying a build plate of the direct metal laser sintering system to accommodate the turbine blade.
5. The method of clause 1, wherein the step of building up an extension of a replacement squealer tip comprising direct metal laser sintering.
6. The method of clause 1, wherein the step of building up an extension of a replacement squealer tip comprises sintering and binding a metallic powder material.
7. The method of clause 6, wherein the step of sintering and binding a metallic powder material comprises sintering and binding a superalloy powder with Al≤-0.5 Ti+3.
8. The method of clause 6, wherein the step of sintering and binding a metallic powder material comprises sintering and binding a superalloy powder with Al≥-0.5 Ti+3.
9. The method of clause 6, wherein the step of sintering and binding a metallic powder material comprises sintering and binding a superalloy powder with high oxidation resistance.
10. The method of clause 1, wherein the step of building up an extension of a replacement squealer tip comprises creating a cooling passage within the extension.
11. The method of clause 10, wherein the step of building up an extension of a replacement squealer tip comprises creating a cooling passage within the extension with a rough surface therein.
12. The method of clause 10, wherein the step of building up an extension of a replacement squealer tip comprises creating a cooling passage within the extension with an aluminide coating.
13. A turbine blade for use in a gas turbine engine, comprising:
   an airfoil; and
   a squealer tip built up on the airfoil;
   the squealer tip comprising a cooling passage therein;
   the squealer tip comprising a superalloy suitable for an additive manufacturing process.
14. The turbine blade of clause 13, wherein the squealer tip comprises a replacement squealer tip.
15. The turbine blade of clause 13, wherein the squealer tip comprises a squealer tip extension built up on the airfoil.
16. A method of repairing a turbine blade, comprising:
   removing an existing squealer tip from the turbine blade in whole or in part;
   positioning the turbine blade in an additive manufacturing system;
   building up a superalloy extension of a replacement squealer tip on the turbine blade in whole or in part; and
   creating a cooling passage through the superalloy extension.
17. The method of clause 16, wherein the step of removing an existing squealer tip from the turbine blade comprises machining the existing squealer tip in whole or in part.
18. The method of clause 16, wherein the step of positioning the turbine blade in an additive manufacturing system comprises positioning the turbine blade in a direct metal laser sintering system or an electron beam welding system.
19. The method of clause 18, wherein the step of positioning the turbine blade in an additive manufacturing system comprises modifying a build plate of the direct metal laser sintering system to accommodate the turbine blade.
20. The method of clause 16, wherein the step of building up a superalloy extension of a replacement squealer tip comprising direct metal laser sintering a metallic powder material.

## Claims

1. A method of repairing a turbine blade (100), comprising:
removing an existing squealer tip (85) from the turbine blade (100) in whole or in part;
positioning the turbine blade (100) in an additive manufacturing system; and
building up an extension (120) of a replacement squealer tip (110) on the turbine blade (100) in whole or in part.

2. The method of claim 1, wherein the step of removing an existing squealer tip (85) from the turbine blade (100) comprises machining the existing squealer tip (85) in whole or in part.

3. The method of claim 1, wherein the step of positioning the turbine blade (100) in an additive manufacturing system comprises positioning the turbine blade (100) in a direct metal laser sintering system or an electron beam welding system.

4. The method of claim 3, wherein the step of positioning the turbine blade (100) in an additive manufacturing system comprises modifying a build plate of the direct metal laser sintering system to accommodate the turbine blade (100).

5. The method of claim 1, wherein the step of building up an extension (120) of a replacement squealer tip (110) comprising direct metal laser sintering.

6. The method of claim 1, wherein the step of building up an extension (120) of a replacement squealer tip (110) comprises sintering and binding a metallic powder material.

7. The method of claim 6, wherein the step of sintering and binding a metallic powder material comprises sintering and binding a superalloy powder with Al≤-0.5 Ti+3.

8. The method of claim 6, wherein the step of sintering and binding a metallic powder material comprises sintering and binding a superalloy powder with Al≥-0.5 Ti+3.

9. The method of claim 6, wherein the step of sintering and binding a metallic powder material comprises sintering and binding a superalloy powder with high oxidation resistance.

10. The method of claim 1, wherein the step of building up an extension (120) of a replacement squealer tip (110) comprises creating a cooling passage (130) within the extension (120).

11. The method of claim 10, wherein the step of building up an extension (120) of a replacement squealer tip (110) comprises creating a cooling passages (130) within the extension (120) with a rough surface therein.

12. The method of claim 10, wherein the step of building up an extension (120) of a replacement squealer tip (110) comprises creating a cooling passage (130) within the extension (120) with an aluminide coating therein.

13. A turbine blade (100) for use in a gas turbine engine (10), comprising:
an airfoil (60); and
a squealer tip (110) built up on the airfoil (60);
the squealer tip (110) comprising a cooling passage (130) therein;
the squealer tip (110) comprising a superalloy suitable for an additive manufacturing process.

14. The turbine blade (100) of claim 13, wherein the squealer tip (110) comprises a replacement squealer tip (110).

15. The turbine blade (100) of claim 13, wherein the squealer tip (110) comprises a squealer tip extension (120) built up on the airfoil (60).
